# EUROPEAN PATENT SPECIFICATION

(11) **EP 0 867 324 B1**
(45) Date of publication and mention of the grant of the patent: **21.05.2003**
(21) Application number: 98200658.7
(22) Date of filing: 04.03.1998
(51) Int. Cl.: B60K 7/00

(54) **Vehicle, in particular a lift truck, operated by an electric motor with counter-rotating stator and rotor**
Fahrzeug, insbesondere Gabelstapler, angetrieben durch einem elektrischen Motor mit gegenläufigem Stator und Rotor
Véhicule, notamment un chariot élévateur, entrainé par un moteur électrique dont le rotor et le stator tournent en sens opposé

(30) Priority: 25.03.1997 IT MI970686
(43) Date of publication of application: 30.09.1998
(73) Proprietor: NUOVA M.A.I.P., MACCHINE AGRICOLE INDUSTRIALI PIERALISI S.P.A., Jesi (Ancona) (IT)
(72) Inventor: Pieralisi, Gennaro, Jesi (Ancona) (IT)
(74) Representative: Raimondi, Alfredo, Dott. Ing. Prof.

(56) References cited:
- EP-A- 0 587 120
- US-A- 3 267 311
- US-A- 3 894 605
- US-A- 4 130 172
- PATENT ABSTRACTS OF JAPAN vol. 001, no. 112 (E-048), 28 September 1977 & JP 52 045009 A (EKUTASU SYST KK), 8 April 1977 & JP 52 045009 A

## Description

The present invention relates to a vehicle, in particular a lift truck, with driving wheels actuated by an electric motor, the stator of which rotates with respect to the fixed frame of the vehicle and is connected to one of the two driving wheels of the same axle and the rotor of which is connected to the other driving wheel of the said axle.

In the art, vehicles called lift trucks are known, which vehicles may have three wheels, two of which are on the same axle and one of which forms a driving wheel, or four wheels arranged in pairs on two axles, one of which is a driving pair.

It is also known that there is a need common to all the vehicles to adapt the speed of the two driving wheels - one internal and the other external - to the various paths followed when negotiating a bend.

For this purpose, solutions based on the use of a motor associated with a differential of the traditional type are known, which solutions, however, have some disadvantages particularly in terms of loss of efficiency and the possibility of causing each driving wheel to rotate in the opposite direction to each other in order to obtain steering with the centre of curvature within the external contour of the vehicle so as to improve the manoeuvrability thereof.

Alternatively, solutions based on the use of two independent motors individually actuating each driving wheel are known; although these solutions are able to resolve the aforementioned problem of the centre of curvature within the external contour of the truck, they have, however, some drawbacks including the need for synchronisation of the two motors as well the high cost due to duplication of the motors themselves and the introduction of synchronisation mechanisms.

It is also known from US-A-3 267 311, US-A-3 894 605 and EP-A- 0 587 120 to realize vehicle with axis according to the features of the precharacterizing port of claim 1.

Such vehicles still present some drawback deriving from the difficulty to manoeuvre in confined spaces.

The technical problem which is posed, therefore, is that of providing a vehicle, in particular a lift truck, equipped with an apparatus for actuating the driving wheels, which enables the aforementioned drawbacks to be overcome and which provides a greater efficiency compared to both the single motor/differential solution and the twin-motor solution.

Within the scope of this problem a further requirement is that said apparatus should have a simple design, ensure precision and reliability of control, not require complicated synchronisation devices and be able to be applied, without difficulty, to commercial vehicles as well.

These known problems are solved according to the present invention by a vehicle, in particular a lift truck, according to the characteristic of claim 1.

Further details may be obtained from the following description of a non-limiting example of embodiment of the invention, provided with reference to the accompanying drawings in which:
Figure 1 shows a schematic cross-section along a vertical axial plane of an axle of a lift truck equipped with an actuating apparatus according to the prior art;
Figure 2 is the operational circuit diagram of the actuating apparatus according to the invention;
Figure 3 is a partial cross-section, similar to that of Figure 1, of the detail of one of the two driving wheels of a truck with a device for reversing the direction of rotation of one of the two wheels with respect to the other one, according to the invention;
Figs. 3a,3b show a schematic illustration of the device for reversing the direction of rotation of one of the two driving wheels in the two possible positions, respectively;
Figure 4 shows a schematic cross-section along a vertical axial plane of an axle of a four-wheel lift truck equipped with an actuating apparatus according to the invention having an alternating-current motor;
Figure 5 is an operational circuit diagram of the actuating apparatus according to Figure 4;
Figure 6 is a partial cross-section, similar to that of Figure 4, of the detail of one of the two driving wheels of a truck with a device for reversing the direction of rotation of a wheel with respect to the other one, according to a preferred alternative embodiment;
Figure 6a is a detail of the reversing device according to Fig. 6.

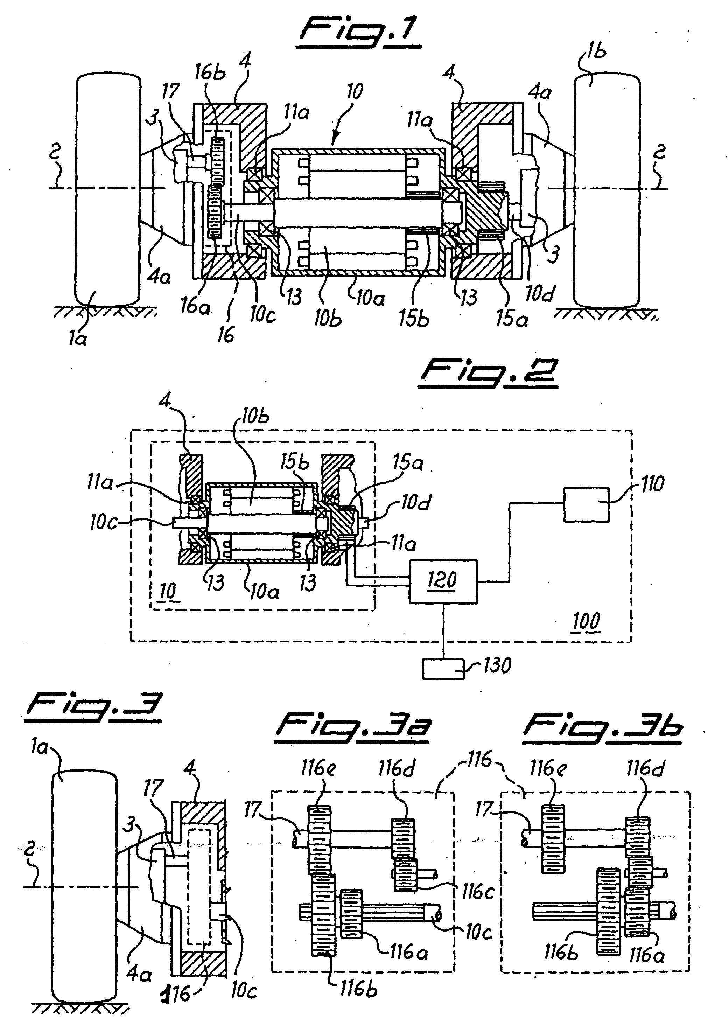

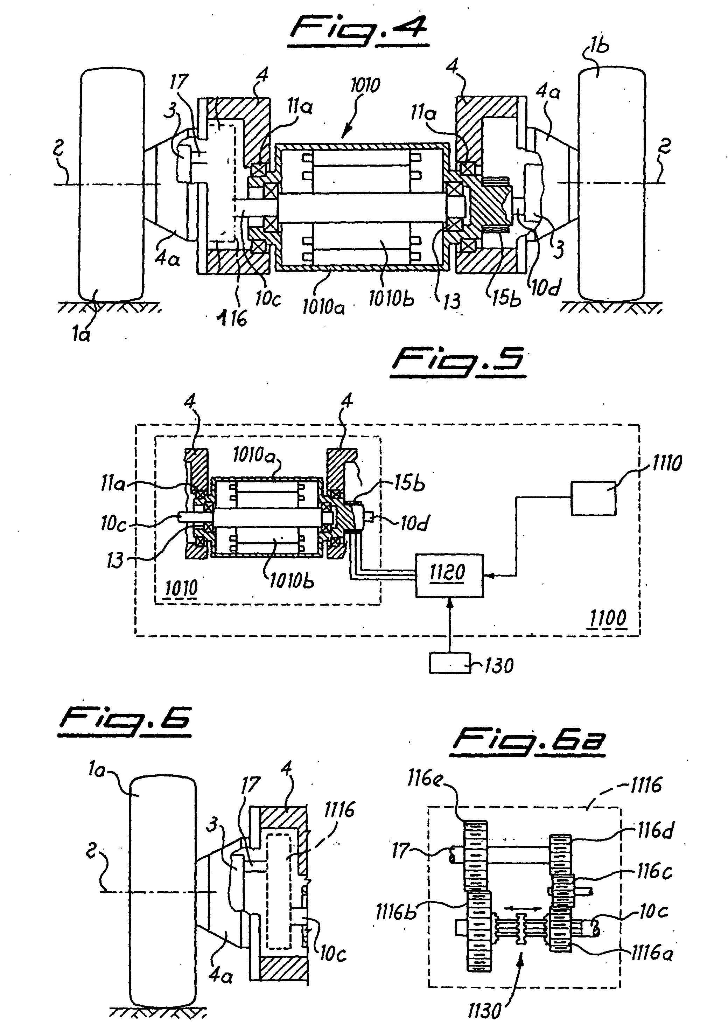

As illustrated in Figure 1, each driving wheel 1a and 1b of the lift truck according to the invention is mounted on a hub which is schematically shown with the axle 2 and supported by a reduction unit 3, in a manner known per se and therefore not described in detail, housed inside a casing 4a integral with a fixed supporting frame 4.

The apparatus 10 for actuating the wheels 1a, 1b, is located between the two opposite reduction units and is connected, in turn, to the control and regulating devices 100 schematically shown in Figure 2.

The apparatus according to the invention essentially consists of a direct-current electric motor 10, comprising a stator 10a supported, via bearings 11a, by the fixed support 4 and rotating with respect to the latter.

The stator 10a has, extending externally from it, a coaxial spindle 10d connected to the reduction unit 3 actuating one, 1b, of the two driving wheels of the truck, which therefore rotates in the same direction as the stator 10a.

The stator 10a supports, in turn, via bearings 13, the coaxial shaft 10c onto which the rotor 10b is keyed.

Said shaft 10c extends outside the rotor 10b towards the other driving wheel 1a and is connected to the associated reduction unit 3 by a device 16 for reversing the direction of rotation.

Said device 16 comprises a first toothed wheel 16a mounted on the shaft 10c, and a second gear 16b mounted on the input shaft 17 of the said reduction unit 3.

In this way it is possible to cause rotation of the wheel 1a in the same direction as the wheel 1b despite the fact that the stator 10a and the rotor 10b rotate in opposite directions.

As illustrated in Figure 2, the means 100 for controlling and regulating the motor 10 comprise a battery 110 and a current regulator 120 operated by the accelerator 130 of the truck.

As can be seen, the rotor 10b is made to rotate by the direct-current supply from the brushes 15b which are supplied by means of the brushes 15a of the stator 10a which receive current from the regulator 120.

As illustrated in Figure 3, it is also possible to obtain rotation of the two driving wheels 1a, 1b in opposite directions, so as to produce a centre of curvature of the steering within the external contour of the truck.

In this case the device 116 for reversing the direction of rotation of the wheel 1a comprises: a pair of coaxial gears 116a, 116b, mounted on the shaft 10c and movable in translation thereon between two opposite positions; an idle wheel 116c, in turn engaged with a third wheel 116d mounted on the input shaft 17 into the reduction unit 3, which shaft also has, mounted on it, an additional toothed wheel 116e located at a certain distance from the said wheel 116d.

The translation, in either direction, of the toothed wheels 116 on the shaft 10c causes in one case (Fig. 3a) direct engagement of the wheel 116b of the rotor shaft 10c with the wheel 116e of the input shaft 17 into the reduction unit 3 and therefore a configuration in which the wheel 1a rotates in the same direction as the wheel 1b.

Alternatively, and as illustrated in Figure 3b, by bringing the wheel 116a into engagement with the idle wheel 116c, a configuration arises in which the wheel 1a rotates in the opposite direction to the wheel 1b, allowing the said steering with the centre of curvature inside the external contour of the truck, a possibility which is particularly useful for manoeuvres in confined spaces.

As illustrated in Figure 4 (similar to Fig. 1), the actuating apparatus may be designed as an alternative embodiment which involves essentially replacement of the direct-current motor 10 with an alternating-current motor 1010.

As can be seen, the housing of the motor is integral with a casing forming the stator 1010a from which the shaft 10d emerges.

The stator 1010a is made to rotate by the brushes 15b which receive current via a variable-frequency alternating-current generator 1120 supplied by the battery 1110.

As in the preceding case, the rotor 1010b supports the shaft 10c for connection to the driving wheel. In this case also means 16 are provided for reversing the direction of rotation of the input shaft into the reduction unit of one, 1a, of the two driving wheels.

Figure 6a illustrates a further embodiment of a device 1116 for obtaining the rotation of the two driving wheels in opposite directions.

Said device comprises two toothed wheels 1116a and 1116b which are mounted fixed onto the shaft 10c together with a coupling 1130 arranged between the wheels themselves.

In this case also there is provided an idle wheel 116c meshing with the wheel 1116a and with a third wheel 116d mounted on the input shaft 17 into the reduction unit 3; an additional toothed wheel 116e meshing with said wheel 1116b is also keyed onto said shaft.

The actuation of the said coupling 1130 in either direction therefore causes the rotation of the wheel 1116a or of the wheel 1116b with consequent transmission of the movement via the wheel 116c or 1116e and therefore the rotation of the wheel 1a with respect to the wheel 1b in the same direction or in opposite directions.

It is therefore obvious how a lift truck equipped with actuating apparatus according to the invention is able to achieve all the advantages of the actuating movements of a single motor, but without the disadvantages resulting from the presence of the differential, the function of which is performed by the combined action of the stator and the rotor which, rotating with an adjustable differential speed, perform the same function without loss of efficiency. It is also obvious that many variations may be introduced by the person skilled in the art as regards the choice of the parts which make up the actuating and control apparatus. In the case of actuation with an a.c. motor, special motors with a high starting torque designed to provide the necessary performance characteristics may be used.

Alternatively a clutch may be arranged between the rotor/stator shaft and the corresponding wheel, so that the clutch itself is normally disengaged so as to allow normal start-up of the truck.

On the other hand, if required, the engagement of the clutch allows the motor to run under no-load conditions so that, when the clutch is disengaged, the inertia of the motor is used in order to increase the starting torque of the truck.

## Claims

1. Vehicle, in particular a lift truck, comprising a frame (4) and at least one driving axle on each end of which a respective wheel (1a,1b) is mounted, wherein said axle is formed by an electric motor (10;1010), the stator (10a;1010a) of which rotates with respect to the frame (4) and is connected to one (1b) of the two wheels (1a,1b) mounted on said axle and the rotor (10b;1010b) of which is connected to the other one (1a) of said wheels (1a,1b) through a transmission (11b; 111b) and a reduction unit (3), **characterized in that** said transmission (116) between rotor/stator and corresponding reduction unit (3) comprises means for reversing the direction of rotation of one wheel with respect to the other one.

2. Vehicle according to Claim 1, **characterized in that** said transmission (116) comprises a pair of coaxial gears (116a,116b) mounted on the rotor shaft (10c) and movable in translation thereon between two opposite positions, an idle wheel (116c) also being provided, being in turn engaged with a third wheel (116d) mounted on the input shaft (17) into the reduction unit (3), which shaft also has, mounted on it, an additional toothed wheel (116e) located at a distance from the said wheel (116d) equal to the translational path of the pair of gears (116a,116b).

3. Vehicle according to Claim 1, **characterized in that** said transmission (1116) comprises two toothed wheels (1116a, 1116b) mounted fixed on the shaft (10c) with the intervening arrangement of a coupling (1130), there also being provided an idle wheel (116c) meshing with the wheel (1116a) and with a third wheel (116d) mounted on the input shaft (17) into the reduction unit (3), on which shaft an additional toothed wheel (116e) meshing with said wheel (1116b) is also keyed.

4. Vehicle according to Claim 1, **characterized in that** said stator (10a;1010a) is supported by bearings (11a) integral with the frame (4) of the vehicle with respect to which the stator rotates.

5. Vehicle according to Claim 1, **characterized in that** said stator and rotor are counter-rotating.

6. Vehicle according to Claim 1, **characterized in that** said stator and rotor rotate with a relative speed which can be controlled by means of a control and regulating apparatus (110;1100).

7. Vehicle according to Claim 1, **characterized in that** said electric motor is a direct-current electric motor (10).

8. Vehicle according to Claim 1, **characterized in that** said electric motor is an alternating-current electric motor (1010).

## Patentansprüche

1. Fahrzeug, insbesondere Hubwagen, das einen Rahmen (4) und wenigstens eine Antriebsachse besitzt, wobei an jedem Ende der Antriebsachse jeweils ein Rad (1a, 1b) montiert ist, wobei die Achse durch einen Elektromotor (10; 1010) gebildet ist, dessen Stator (10a, 1010a) sich in bezug auf den Rahmen (4) dreht und mit einem (1a) der beiden an der Achse montierten Räder (1a, 1b) verbunden ist und dessen Rotor (10b; 1010b) mit dem anderen (1a) der Räder (1a, 1b) über ein Getriebe (116; 1116) und eine Untersetzungseinheit (3) verbunden ist, **dadurch gekennzeichnet, daß** das Getriebe (116) zwischen Rotor/Stator und der entsprechenden Untersetzungeinheit (3) Mittel umfaßt, die die Drehrichtung eines Rades in bezug auf das andere umkehren.

2. Fahrzeug nach Anspruch 1, **dadurch gekennzeichnet, daß** das Getriebe (116) ein Paar koaxialer Zahnräder (116a, 116b), die an der Rotorwelle (10c) montiert und daran translatorisch zwischen zwei gegenüberliegenden Positionen beweglich sind, umfaßt, wobei ferner ein Leerlaufrad (116c) vorgesehen ist, das seinerseits mit einem dritten Rad (116d) in Eingriff ist, das an der Eingangswelle (17) der Untersetzungseinheit (3) montiert ist, wobei auf dieser Welle außerdem ein zusätzliches Zahnrad (116e) montiert ist, das sich in einem Abstand von dem Rad (116d) befindet, der gleich dem translatorischen Weg des Paars von Zahnrädern (116a, 116b) ist.

3. Fahrzeug nach Anspruch 1, **dadurch gekennzeichnet, daß** das Getriebe (116) zwei Zahnräder (1116a, 1116b) umfaßt, die an der Welle (10c) montiert sind, wobei dazwischen eine Kupplung (1130) angeordnet ist und wobei außerdem ein Leerlaufrad (116c) vorgesehen ist, das mit dem Rad (1116) und mit einem an der Eingangswelle (17) der Untersetzungseinheit (3) montierten dritten Rad (116d) kämmt, wobei auf der Achse ein zusätzliches Zahnrad (116e), das mit dem Rad (1116b) kämmt, verkeilt ist.

4. Fahrzeug nach Anspruch 1, **dadurch gekennzeichnet, daß** der Stator (10a; 1010a) durch Lager (11a) unterstützt ist, die mit dem Rahmen (4) des Fahrzeugs, in bezug auf den sich der Stator dreht, einteilig ausgebildet sind.

5. Fahrzeug nach Anspruch 1, **dadurch gekennzeichnet, daß** sich der Stator und der Rotor entgegengesetzt drehen.

6. Fahrzeug nach Anspruch 1, **dadurch gekennzeichnet, daß** sich der Stator und der Rotor mit einer Relativgeschwindigkeit drehen, die durch eine Steuerungs- und Regulierungsvorrichtung (110; 1100) gesteuert werden kann.

7. Fahrzeug nach Anspruch 1, **dadurch gekennzeichnet, daß** der Elektromotor ein Gleichstrom-Elektromotor (10) ist.

8. Fahrzeug nach Anspruch 1, **dadurch gekennzeichnet, daß** der Elektromotor ein Wechselstrom-Elektromotor (1010) ist.

## Revendications

1. Véhicule, en particulier un chariot élévateur, comprenant un châssis (4) et au moins un essieu moteur à chaque extrémité duquel est montée une roue (1a, 1b respective, dans lequel ledit essieu est formé par un moteur électrique (10 ; 1010), dont le stator (10a, 1010a) tourne par rapport au châssis (4) et est relié à l'une (1b) des deux roues (1a, 1b) montées sur ledit essieu et dont le rotor (10b ; 1010b) est connecté à l'autre (1a) desdites roues (1a, 1b par l'intermédiaire d'une transmission (116 ; 1116) et d'un réducteur (3),
**caractérisé en ce que** ladite transmission (116) montée entre le rotor/stator et le réducteur (3) correspondant comprend des moyens permettant d'inverser le sens de rotation d'une roue par rapport à l'autre.

2. Véhicule selon la revendication 1, **caractérisé en ce que** ladite transmission (116) comprend une paire de roues dentées (116a, 116b) coaxiales, montées sur l'arbre de rotor (10c) et déplaçables en translation sur celui-ci entre deux positions opposées, une roue folle (116c) étant également prévue, à son tour engrenée avec une troisième roue (116d) montée sur l'arbre d'entrée (17) dans le réducteur (3), ledit arbre ayant également, une roue dentée (116e) additionnelle montée sur celui-ci et placée à une distance de ladite roue (116d) égale à la course de déplacement en translation de la paire de roues dentées (116a, 116b).

3. Véhicule selon la revendication 1, **caractérisé en ce que** ladite transmission (1116) comprend deux roues dentées (1116a, 1116b) montées rigidement sur l'arbre (10c) avec l'agencement intermédiaire d'un accouplement (1130), une roue folle (116c) étant également prévue, s'engrenant avec la roue (1116a) et avec une troisième roue (116d) montée sur l'arbre d'entrée (17) dans le réducteur (3), arbre sur lequel une roue dentée (116e) additionnelle, s'engrenant avec ladite roue (1116b), est également clavetée.

4. Véhicule selon la revendication 1, **caractérisé en ce que** ledit stator (10a ; 1010a) est supporté par les paliers (11a) réalisés d'une seule pièce avec le châssis (4) du véhicule par rapport auquel tourne le stator.

5. Véhicule selon la revendication 1, **caractérisé en ce que** ledit stator et rotor sont en contre-rotation.

6. Véhicule selon la revendication 1, **caractérisé en ce que** ledit stator et le rotor tournent avec une vitesse relative pouvant être commandée à l'aide d'un dispositif de commande et de régulation (110; 1100).

7. Véhicule selon la revendication 1, **caractérisé en ce que** ledit moteur électrique est un moteur électrique à courant continu (10).

8. Véhicule selon la revendication 1, **caractérisé en ce que** ledit moteur électrique est un moteur électrique à courant alternatif (1010).
